(19) Europäisches Patentamt

European Patent Office

Office européen des brevets

(11) **EP 1 146 349 A2**

(12) **EUROPEAN PATENT APPLICATION**

(43) Date of publication:
**17.10.2001 Bulletin 2001/42**

(51) Int Cl.⁷: **G01S 1/04**, G01S 5/14

(21) Application number: **01660051.2**

(22) Date of filing: **21.03.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **24.03.2000 FI 20000697**<br><br>(71) Applicant: **NOKIA MOBILE PHONES LTD.**<br>**02150 Espoo (FI)** | (72) Inventor: **Syrjärinne, Jari**<br>**33500 Tampere (FI)**<br><br>(74) Representative: **Pursiainen, Timo Pekka**<br>**Tampereen Patenttitoimisto Oy,**<br>**Hermiankatu 6**<br>**33720 Tampere (FI)** |

(54) **A method for performing location determination and its corresponding receiver**

(57) The invention relates to a method for synchronizing a receiver (MS) to a code modulated signal transmitted by satellites (SV1-SV4). Information is transmitted in the method by modulating said code modulated signal in the transmission step, and demodulation is performed in the reception step to clarify the transmitted information. At least partly the same information is transmitted from the satellites essentially simultaneously. In the method, a signal transmitted by two or more satellites is received, the transit time differences of the received signals are determined for mutual synchronization of the signals transmitted from different satellites, and an analysis signal is formed by using at least a part of at least two synchronized signals received from different satellites.

Fig. 4

## Description

The present invention relates to a method according to the preamble of Claim 1 for location determination, a receiver according to the preamble of Claim 10 and a positioning system according to the preamble of Claim 19.

A well known positioning system is the GPS system (Global Positioning System), which at the moment comprises over 20 satellites, of which at least 4, in some cases even 14 satellites are simultaneously visible to a receiver. These satellites transmit various information, such as ephemeris data and the satellite time. Normally, the receiver determines its location by calculating the transit time of a signal transmitted simultaneously from satellites of the positioning system to the receiver. For determining its location, the receiver must typically receive the signals of at least four visible satellites to be able to calculate the x, y and z coordinates of the location of the receiver and the time data. The received raw navigation data bits are stored in a memory.

Each satellite of the GPS system in operation transmits one ranging signal at the carrier frequency of 1575.42 MHz called L1. This frequency is also denoted $154f_0$, where $f_0=10.23$ MHz. In addition, the satellites transmit another ranging signal at the carrier frequency of 1227.6 MHz (L2), or $120f_0$. In the satellite, these signals are modulated with at least one pseudo-random sequence. Each satellite has a different pseudo-random sequence. After the modulation, the signal is a code modulated wideband signal. The modulation technique used makes it possible for the receiver to distinguish between signals transmitted by different satellites, although the carrier frequencies used in the transmission are essentially the same. This modulation technique is called Code Division Multiple Access (CDMA). The pseudo-random sequence used in each satellite for the modulation of the L1 signal is, for instance, a so-called C/A code (Coarse/Acquisition code), which is a code from the family of Gold codes. Each GPS satellite transmits a signal by using a unique C/A code. The codes are formed as the modulo 2 sum of two 1023-bit binary sequences. The first binary sequence G1 has been formed with the polynome $X^{10}+X^3+1$, and the second binary sequence G2 has been formed by delaying the polynome $X^{10}+X^9+X^8+X^6+X^3+X^2+1$ so that each satellite has a different delay. This arrangement enables generating different C/A codes with a similar code generator. The C/A codes are binary codes, the chipping rate of which in the GPS system is 1.023 MHz. The C/A code comprises 1023 chips, and thus the repeating time of the code, epoch, is 1 ms. The carrier wave of the L1 signal is further modulated with navigation information at the bit rate of 50 bit/s. The navigation information comprises information about the "health", orbit and time of the satellite, for instance.

Modulation of the navigation information is preferably performed so that at least 20 epochs formed by the code used as the pseudo-random sequence is used in the transmission of one information bit. If the value of the information bit to be modulated is the first binary value, values selected for the chips of the epoch are used in the modulation, and if the value of the information bit is the second binary value, the value opposite to the value selected for each chip of the epoch is used in the modulation.

The satellites monitor the condition of their equipment during operation. For example, the satellites can use so-called watchdog functions to detect faults in the equipment and notify about them. Errors and malfunctions can be either momentary or long-term in nature. On the basis of the health information, some of the errors can be possibly compensated for, or the information transmitted by a malfunctioning satellite can be entirely ignored. In addition, in a situation where the signal of more than four satellites can be received, the information received from different satellites can be emphasized in different ways on the basis of the health information. Thus it is possible to minimize errors that satellites which seem to be unreliable may cause in the measurements.

In order to detect the signals of the satellites and to identify the satellites, the receiver must perform acquisition, whereby the receiver seeks out the signal of each satellite and tries to acquire with this signal so that the data transmitted with the signal can be received and demodulated.

The receiver must perform acquisition when, for instance, the receiver is powered-up, and in a situation that the receiver has not been able to receive the signal of any satellite for a long time. A situation like this can easily arise in mobile terminals, for example, because the terminal moves and the antenna of the terminal is not always in an optimal position in relation to the satellites, which weakens the strength of the signal coming to the receiver. In city areas, buildings also have an effect on the received signal, and in addition, the signal can propagate to the receiver along several different routes, such as straight from the satellite (line-of-sight) and as reflected from buildings. As a result of this multipath propagation, the same signal is received as several signals in different phases and delays.

The positioning system has two main functions:

1. calculating the pseudo range of the receiver to different GPS satellites, and
2. determining the location of the receiver by using the calculated pseudo ranges and the location information of the satellites. The location information of the satellites at any given time can be calculated on the basis of the ephemeris and time correction information received from the satellites.

The distances to the satellites are called pseudo ranges, because the time is not known accurately in the receiver. Then the calculation of the location and time is repeated, until a sufficient accuracy of time and location has been achieved. Because the time is not known with an absolute accuracy, the location and time must be determined e.g. by linearizing the equation group for each new iteration.

The calculation of the pseudo range can be carried out by measuring the mutual, apparent transit time delays of the signals of different satellites. After the receiver has become synchronized with the received signal, the information transmitted in the signal is clarified.

Almost all known GPS receivers (GPS navigation receivers) use correlation methods for the acquisition and tracking of the code. The reference codes ref(k) or pseudo-random sequences of different satellites have been stored or are generated locally in the receiver. A down conversion is performed on the received signal, whereafter the receiver multiplies the received signal by the replicated pseudo-random sequence. The signal formed as the result of the multiplication is integrated or low-pass filtered, whereupon it is known from the result whether the received signal contained a signal transmitted by a satellite. The multiplication carried out in the receiver is repeated so that each time the phase of the pseudo-random sequence stored in the receiver is shifted. The right delay is concluded from the correlation result preferably so that when the correlation result is the highest, the right delay has been found. Then the receiver is correctly synchronized with the received signal.

After the synchronization with the code has been performed, the frequency is fine-tuned and phase-locking is carried out. This correlation result also expresses the information transmitted in the GPS signal.

The above mentioned synchronization and frequency adjustment process must be performed on each signal of a satellite which is received in the receiver. Some receivers may have several reception channels, whereby each reception channel tries to synchronize with the signal of one satellite at a time and clarify the information transmitted by this satellite.

So-called differential GPS (DGPS) has been developed for making the location determination of a receiver more accurate. The receiver receives the signal of at least four satellites, and this is complemented with corrections given by a reference receiver to eliminate various errors. The reference receiver is typically stationary, and its location is known.

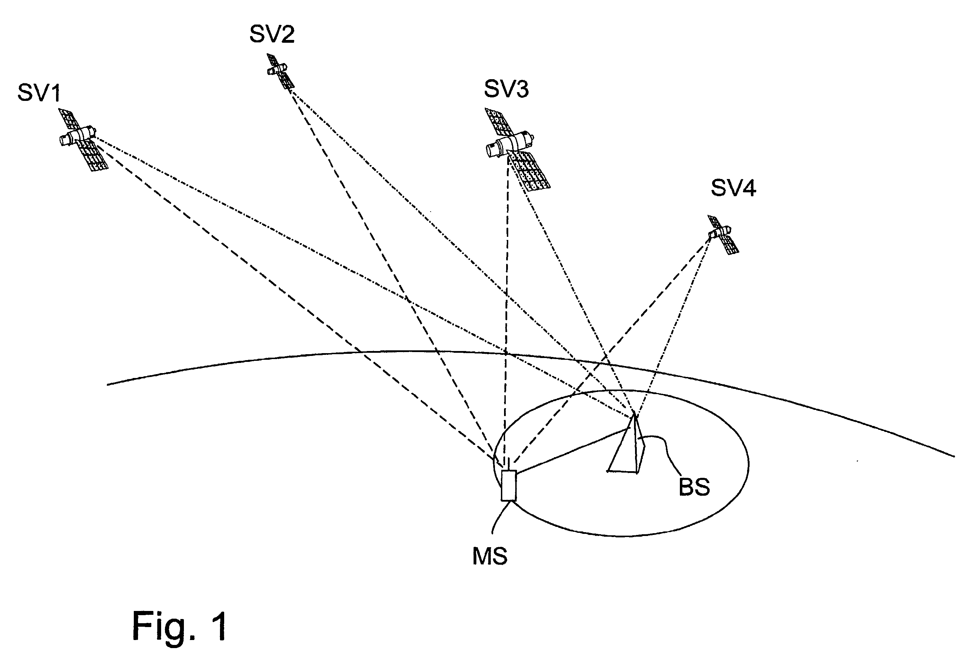

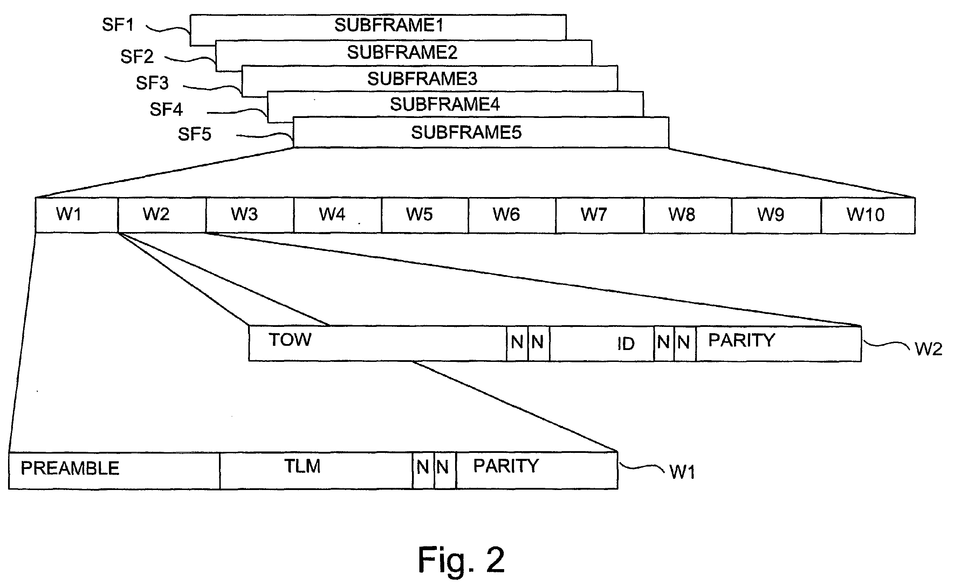

Fig. 1 is a diagram showing the principle of location determination by means of signals transmitted by four satellites SV1, SV2, SV3, SV4 and a reference receiver BS and a positioning receiver MS. In the GPS system, satellites transmit ephemeris data and time data, on the basis of which calculation can be performed in the positioning receiver for determining the location of the satellite at each moment. This transmission of ephemeris data and time data is performed in frames, which are divided into subframes. Fig. 2 shows an example of such a frame structure FR. In the GPS system, each frame comprises 1500 bits, which are divided into five subframes SF1—SF5 comprising 300 bits. Because the transmission of one bit takes 20 ms, the transmission of each subframe takes 6 s, and the whole frame is transmitted in 30 seconds. The subframes are numbered from 1 to 5. The information contained by the subframes can further be divided into ten words (W1—W10), as shown in Fig. 2. The first word is used for sending the preamble and Telemetry Message, for instance. The second word is used e.g. for sending the time data (Time of Week, TOW), which gives the transmission moment of the next subframe. Other words are used for sending information specific to the subframe, such as information about the deviation of the satellite clock from the time of the GPS system.

The subframes 2 and 3 are used for sending ephemeris data. Subframe 4 contains other system information, such as the Universal Time, Coordinated (UTC). Subframe 5 is intended for the transmission of the almanac data of all the satellites. The entity formed by these subframes and frames is called a GPS navigation message, which comprises 25 frames, or 125 subframes. The length of the navigation message is then 12 min 30 s.

In a GPS system, time is measured in seconds from the beginning of the week. In the GPS system, the starting point of the week is the midnight between Saturday and Sunday. Information stating at which point in time of the GPS week the first bit of the next subframe has been sent is transmitted in each subframe. Then the time data expresses the transmission moment of a certain bit, or in the GPS system, the transmission moment of the last bit of the subframe. Time is measured in the satellites by means of very accurate atomic clocks. In spite of this, the operation of each satellite is monitored in the control centre (not shown) of the GPS system, and time comparison is performed, among other things, to detect the clock errors of the satellites and to transmit this information to the satellite.

In the receiver, the reception moment $T_{ToA}^k$ of the received signal can be determined as follows, for example:

$$\hat{T}_{ToA}^k = TOW^k + N_{bit}^k + N_{ms}^k + N_{chip}^k + \Delta chip^k \tag{1}$$

where

$TOW^k =$     the time of week contained by the last received subframe,

$N_{bit}^k =$     the time corresponding to the number of bits received after the bit corresponding to the time of week, i.e.

the last bit of the last received subframe, which contains the time of week,

$N_{ms}^{k} =$ the time passed after the reception of the last received bit,

$N_{chip}^{k} =$ the number of whole chips (0—1022) received after the change of the last epoch,

$\Delta chip^k =$ the measured code phase at the moment when location is calculated, and

$k =$ the satellite index.

All the terms in formula 1, which are added, can be expressed in units of time (seconds). The temporal length of the chips and bits is also known, and it is essentially constant.

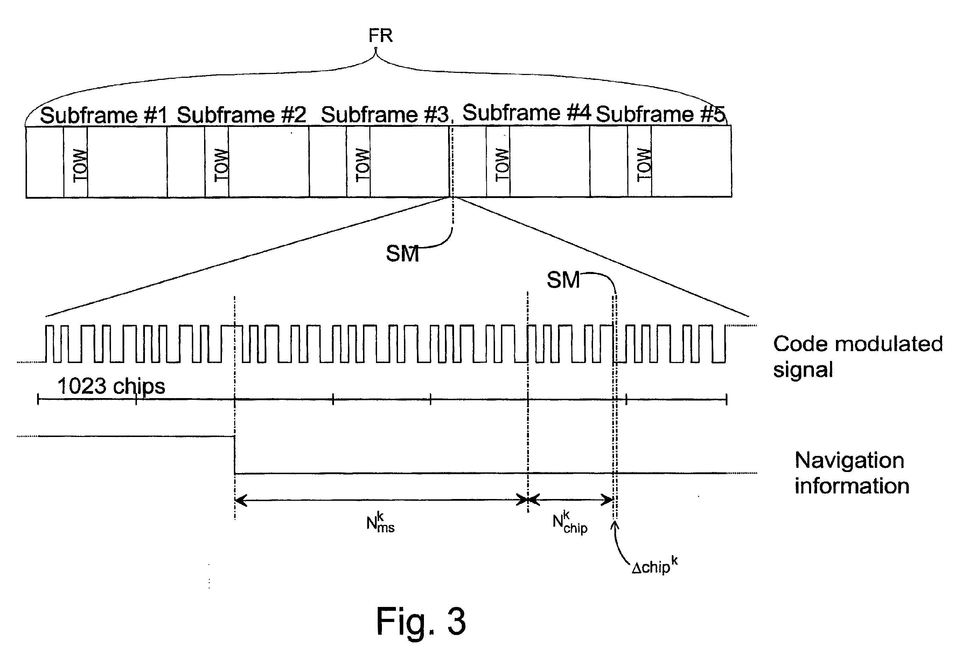

Fig. 3 illustrates this formula and its different terms used in the assessment of the time of arrival of the signal received at a moment of location determination. It is obvious that Fig. 3 is simplified from the real situation, because one epoch, for example, comprises 1023 chips, and it is not practical to represent them accurately. The moment of location determination is represented by a dotted and dashed line, which is denoted by the reference SM.

As can be seen from Formula 1, the location determination signals received from satellites are only used in the determination of the two last terms. However, the determination of the time of arrival of the signal also requires the establishment of the three first terms in Formula 1. These three terms can be established on the basis of the received navigation data and the local reference clock of the receiver. It is important to calculate the time of arrival of the received signal for each signal to be tracked, because the local reference time of the receiver, which is formed by the local oscillator of the receiver, is synchronized to the GPS time on the basis of these values. In addition, the different transit times of signals can be concluded from these measured values, because each satellite transmits the same chip at essentially the same moment. Although there may be small differences in the timing of different satellites, they are monitored, and the error information is transmitted in a GPS navigation message, as was already mentioned above.

In good reception conditions and when an advantageous satellite constellation is used, the location and time error of the user can be determined very accurately. A good satellite constellation means that the satellites used in the location determination have been selected so that as seen from the receiver, they are located clearly in different directions, in which case the angles in which the signals transmitted from different satellites arrive in the receiver, clearly differ from each other.

On the other hand, in a situation where the received signal is weak, the received information contained by the navigation message cannot necessarily be utilized. One of the reasons for this is the fact that the signal-to-noise ratio of the received signal is poor, and therefore the bits transmitted in the signal cannot be detected from the signal. This also means that the reference time of the receiver cannot be corrected to correspond to the real Time of Arrival (ToA), and therefore the calculation according to the formula (1) presented above cannot be performed. Then the only usable measurements carried out from the baseband signal are the number of chips and the code phase. If the receiver does not have proper ephemeris data and reference time available, the location cannot be calculated merely on the basis of the number of chips and the code phase. Neither does old ephemeris data give a sufficiently accurate location of satellites, and hence the accuracy of location determination is reduced. In the worst case, the receiver does not have navigation information at all, which means that the calculation of the times of arrival of the signals according to the formula (1) cannot be performed, and location determination does not succeed. Correspondingly, the lack of reference time makes it impossible to carry out the assessment of the GPS time by the prior art methods, even if ephemeris data were available.

The patent US-5,768,319 discloses a GPS positioning receiver, in which an attempt has been made to improve the signal-to-noise ratio of the signal received from the satellite so that information of several consecutive frames is combined by, for example, summing equivalent bits from consecutive frames to each other. One drawback of this method is the fact that the time required for combining the samples increases when the number of frames combined is increased. Then the time needed for location determination also increases similarly.

One purpose of the present invention is to provide an enhanced method for improving the signal-to-noise ratio received in the receiver, whereby the location of the receiver can also be determined with weaker signal strengths. It is also a purpose of the invention to provide a positioning receiver. The invention is based on the idea that signals transmitted by several different satellites are received, and parts of the signals, in which the information sent from different satellites is the same, are combined. The method according to the present invention is characterized in what is set forth in the characterizing part of Claim 1. The receiver according to the present invention is characterized in what is set forth in the characterizing part of Claim 10. The positioning system according to the present invention is characterized in what is set forth in the characterizing part of Claim 19.

The present invention provides considerable advantages as compared to the prior art methods and positioning receivers. When the method according to the invention is applied, location determination can also be carried out when the strength of the received signal is very weak, as it is inside buildings, for example. The method according to the invention improves the detection of the starting points and value of bits in the received signal.

In the following, the invention will be described in more detail with reference to the accompanying drawings, in which

Figure 1    shows a simplified diagram of the principle of location determination by means of the signals transmitted by four satellites and a reference point in a positioning receiver,

Figure 2    shows an example of the frame structure used in the GPS system,

Figure 3    illustrates the prior art formula and its different terms used in the assessment of the time of arrival of the signal received at a certain moment of location determination.

Figure 4    illustrates the differences in the transit times of the satellite signals to the receiver,

Figure 5    shows the distance of the satellite from the positioning receiver and the base station in the time domain,

Figure 6    is a simplified block diagram of a receiver, in which the method according to the invention can be applied,

Figure 7a    shows the signals received in the reception channels of the receiver in a situation, which represents an example, and

Figure 7b    shows the combined signals formed by a method according to a preferred embodiment of the invention from the signals received in the reception channels of the receiver in a situation shown by way of example.

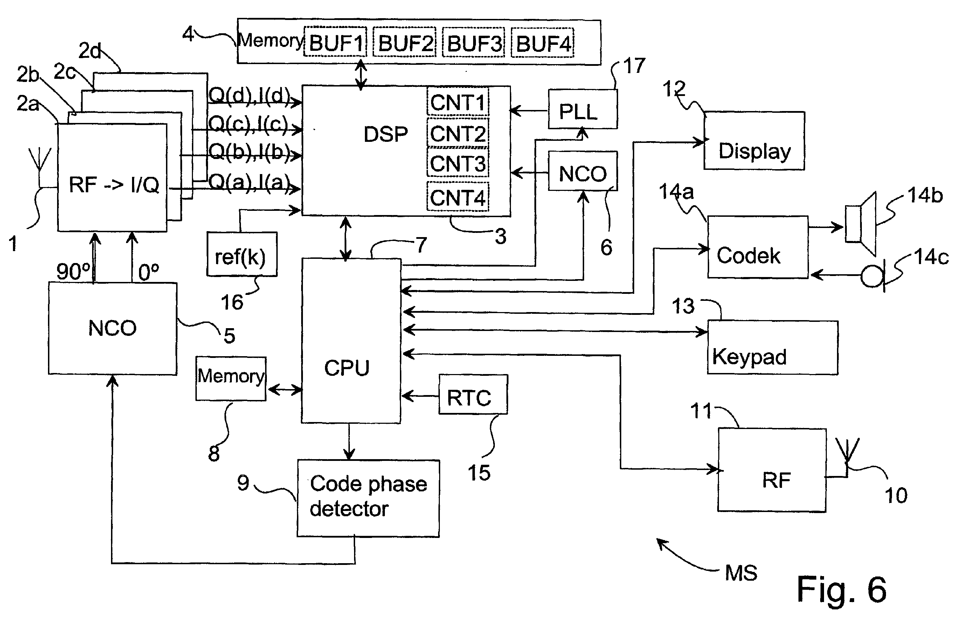

In the positioning receiver MS shown in Fig. 6, the signal received via the first antenna 1 is preferably converted to the intermediate frequency or directly to the baseband in the converter blocks 2a—2d. The receiver MS according to Fig. 6 comprises four reception channels 2a-2d each having a common converter block, but naturally the number of channels may differ from what is presented here. In the converter block, the signal converted to the intermediate frequency or the baseband comprises two components, as is known as such: the components I and Q, between which there is a phase difference of 90°. These analogue signal components converted to the intermediate frequency are digitized. In the digitization, at least one sample is taken of each chip of the signal components, which means that in the GPS system, at least In addition, the I and Q components of the digitized signal are multiplied by the signal formed by the first numerically controlled oscillator (NCO) 5. This signal of the first numerically controlled oscillator 5 is intended to correct the frequency deviation caused by the Doppler shift and the frequency error of the local oscillator (not shown) of the receiver MS. The signals formed in the converter block, which are denoted by the references Q(a), I(a)—Q(d), I(d) in Fig. 6, are preferably conducted to the digital signal processing unit 3. The digital signal processing unit 3 stores navigation information preferably in a memory 4. The reference codes ref(k) corresponding to the codes used in the code modulation of the satellites received at each time are also formed in block 16. Using this reference code ref(k), for instance, the receiver attempts to find the code phase and frequency deviation of the signal of the satellite received on each reception channel for use in operations after the synchronization.

The positioning receiver MS also comprises means for performing the operations of the mobile station, such as another antenna 10, a radio part 11, audio devices, such as a codec 14a, a loudspeaker 14b and a microphone 14c, a display 12 and a keypad 13.

The control block 7 is used to control the code phase detector 9, for instance, and the code phase detector 9 is used to regulate the frequency of the numerically controlled oscillator 5 when required. Acquisition has not been dealt with in more detail in this specification, because it is a technique known as such. After the reception channel has become synchronized with the signal of a satellite SV1, SV2, SV3, SV4, the navigation information sent in the signal can be detected and stored, if possible. However, detection errors may easily occur with weak signals, which has an effect on the positioning accuracy. In order to improve the signal-to-noise ratio, the information received from several different satellites is integrated in a method according to a preferred embodiment of the invention. This will be described in the following.

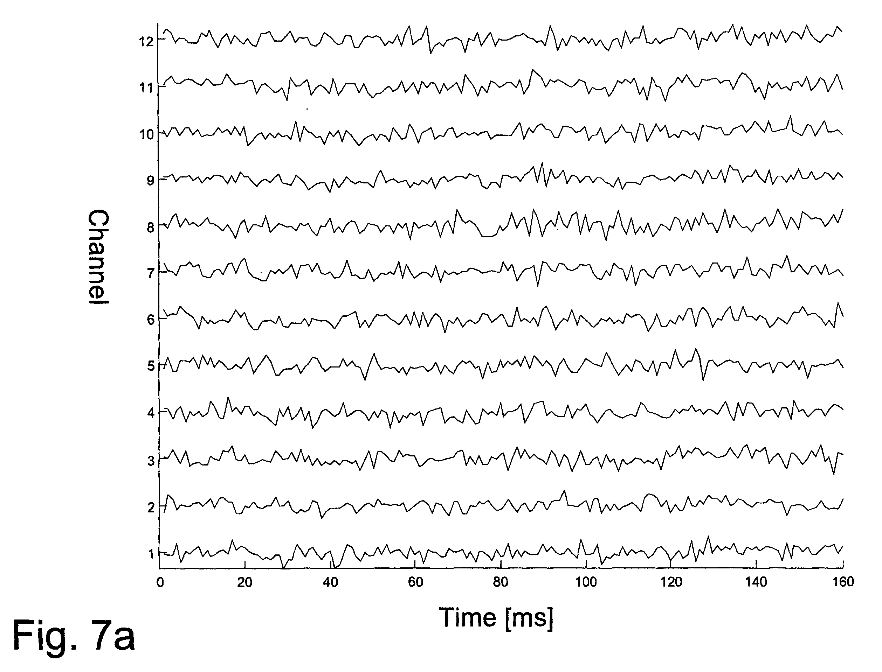

Fig. 7a is a graphical representation of signals received in the reception channels of the receiver in a situation shown by way of example. Each graph represents the signal received from one satellite.

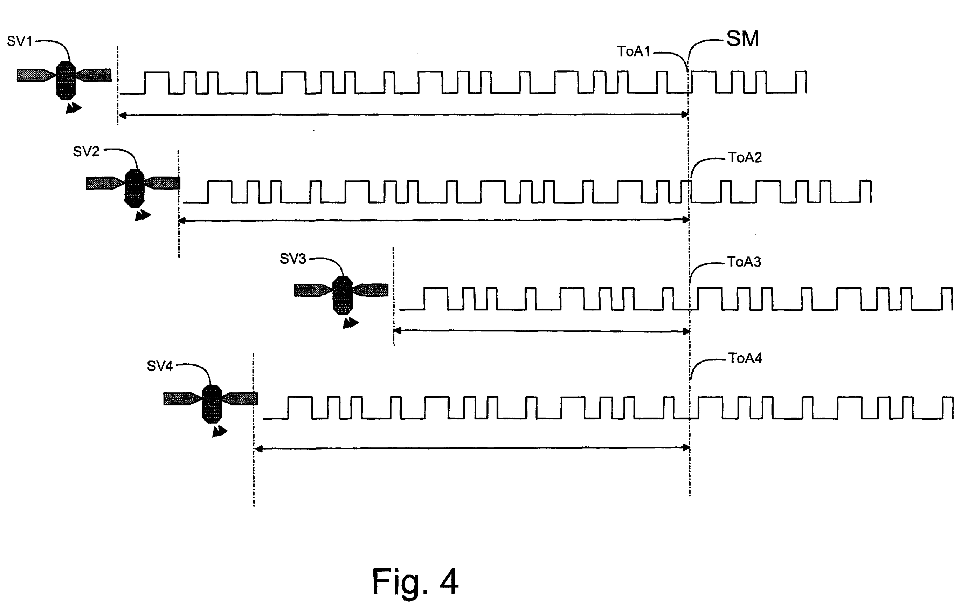

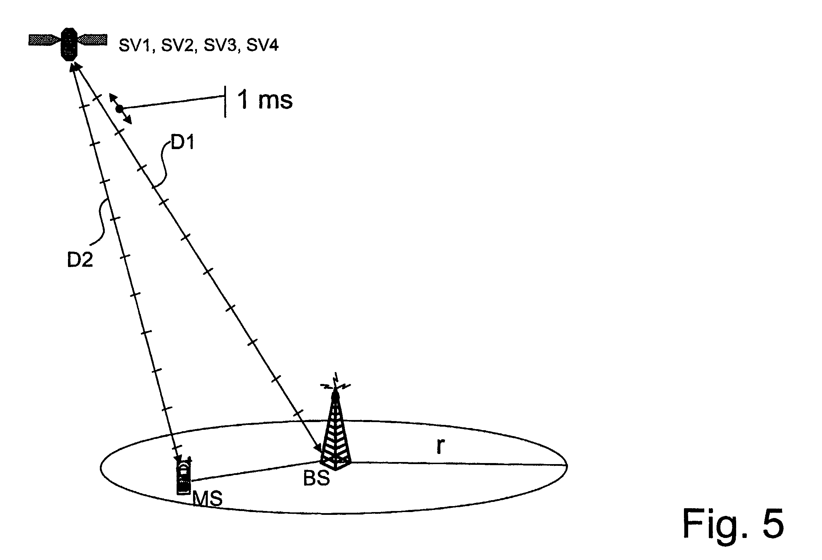

Samples taken from a signal received on different reception channels are stored in the receiver MS. Information transmitted from different satellites at a certain moment does not necessarily arrive in the receiver simultaneously, and therefore the transit time differences between signals transmitted from different satellites must be established in the receiver. This situation is illustrated in Fig. 4, where the signals transmitted by four satellites SV1, SV2, SV3, SV4 are received in the receiver MS essentially simultaneously. In this preferred embodiment of the invention, the receiver MS establishes the transit time differences preferably by means of the mobile communication network. In order to perform this, the receiver sends a request to the mobile communication network for the transmission of ephemeris data to the receiver MS. However, the receiver MS does not necessarily know which satellites have the most advantageous position for determining the location of the receiver MS. Then a network element of the mobile communication network, preferably a base station BS or a serving mobile location centre (MSLC), can select satellites which are above the horizon in relation to the receiver MS and mutually situated so that it is possible to perform the location determination. On the other hand, the mobile communication network can transmit ephemeris data of all satellites and information about the location of the base station BS, which has a connection with the receiver MS, to the receiver MS, whereupon the suitable satellites are selected in the receiver MS. This selection is based on the fact that the distance of the base station BS, which has a connection with the receiver MS, is typically some tens of kilometres at the most, generally not more than 30 km. Then it can be assumed that the receiver MS is within the radius of 30 km from the location of the base station BS. Thus the difference between the transit time of the signal transmitted by the satellite from the satellite to the base station (denoted by D1 in Fig. 5) and the transit time from the satellite to the positioning receiver (denoted by D2 in Fig. 5) is approx. 100 µs at the most. Neither does the distance between the positioning receiver MS and the base station BS in view of the transit times change substantially in the area of the base station BS, and thus it can be assumed that the difference between the times of arrival of the signal of the same satellite in the positioning receiver MS and the base station BS is less than one millisecond. The location of this base station BS can be regarded as the default location for the receiver MS.

According to Formula (1), the determination of the time of arrival ToA comprises five parts, only two last of which, i.e. the number of chips received after the change of the epoch $N_{chip}^{k}$ and the code phase $\Delta chip^{k}$ can be determined in a situation in which the strength of the received signal is weak. With these two parameters, it is possible to measure only chip-level differences (<1 ms) in the signals of different satellites SV1, SV2, SV3, SV4, because the same code is repeated at the intervals of one code phase (=1 ms). Because the distance between each satellite and the receiver may be substantially different, there may be big differences, even over 10 ms, in the transit times of the signals received from different satellites. Then the determination of chip-level differences is not sufficient. One millisecond in time means a distance of approx. 300 km when the signal proceeds essentially at the speed of light. Correspondingly, one chip (approx. 1 µs=1 ms/1023) means about 300 metres.

When the receiver MS has information about the transit time differences of signals transmitted by the satellites, the receiver MS can synchronize the stored samples of the reception channels with each other. In order to perform this, the receiver MS selects one satellite as the reference satellite to which the signal samples of other satellites are synchronized. With regard to the present invention, it is not important which satellite is selected as the reference satellite. In the following it is assumed that the receiver selects the satellite in which the transit time of the signal is the smallest as the reference satellite. In the situation illustrated by Fig. 4, for instance, a satellite like this is the third satellite SV3. A time of sampling is denoted by a dotted and dashed line SM in Fig. 4. The references ToA1, ToA2, ToA3, ToA4 in Fig. 4 denote the time of arrival of signals corresponding to the time of sampling from different satellites SV1, SV2, SV3, SV4. By way of example, it is also assumed that the first reception channel receives the signal of the first satellite SV1, the second reception channel receives the signal of the second satellite SV2, the third reception channel receives the signal of the third satellite SV3, and the fourth reception channel receives the signal of the fourth satellite SV4. However, it is obvious that the reception channels are not limited to the reception of a signal transmitted by any certain satellite.

In the next step, the receiver MS sets the sample counters or the like specific to the reception channel CNT1, CNT2, CNT3, CNT4 (Fig. 6) so that each sample counter points to the same bit in the message frame transmitted by the satellite. Because the satellite from which the signal transit time to the receiver MS is the shortest was selected as the reference satellite above, the sample counter CNT3 of the third reception channel can be set to zero at first. Thus it preferably points to the first sample at the moment in the third sample buffer BUF3 (Fig. 6). The values of other sample counters are set on the basis of the transit time differences. The sample counter CNT1 of the first reception channel, for example, is set so that the transit time of the reference satellite is subtracted from the transit time data of the first satellite SV1, and the number of samples corresponding to this time difference is then the value to be set for the sample counter CNT1 of this first reception channel. If one sample per each chip is taken from the received signals, one sample in the GPS system corresponds to the time of 1/1023 ms. The value of the sample counter is set in a similar manner for the other reception channels. After this, each sample counter points in the corresponding sample buffer to a sample corresponding to a signal transmitted at essentially the same time.

The next step is to combine the samples of signals received from different satellites by summing, for example, to form an analysis sample string. Then e.g. the signal processing unit 3 in the receiver MS sums the sample values in the memory location pointed by each sample counter and sets the sum as a certain value of the analysis sample string. The sample counter of the reception channel used in the reception of the signal of the reference satellite can preferably be used as the pointer of the analysis sample string. After summing, the value of the sample counters is preferably changed by one. Summing is repeated until the required number of samples has been used, e.g. sample strings corresponding to the time of 1 s. Naturally it is also possible to take the mean value, for instance, of the samples in addition to summing.

The improvement of the signal-to-noise ratio as a function of the number of satellites used in the summing is presented as decibel values in Table 1. When calculating the values of Table 1, it was assumed that the noise is essentially as strong and essentially independent of the others in each reception channel. The values of Table 1 have been calculated with the formula

$$\Delta SNR = 10 \log_{10} \left[ \frac{\left( \sum_N A_d \right)^2}{\sum_N \sigma_n^2} \right] \qquad (2)$$

where $A_d$ is the amplitude of the samples, $\sigma_n^2$ is the variance of the noise and N is the number of reception channels.

TABLE 1

| N | $\Delta$SNR [dB] |
|---|---|
| 2 | 3,01 |
| 3 | 4,77 |
| 4 | 6,02 |
| 5 | 6,99 |
| 6 | 7,78 |
| 7 | 8,45 |
| 8 | 9,03 |
| 9 | 9,54 |
| 10 | 10,00 |
| 11 | 10,41 |
| 12 | 10,79 |

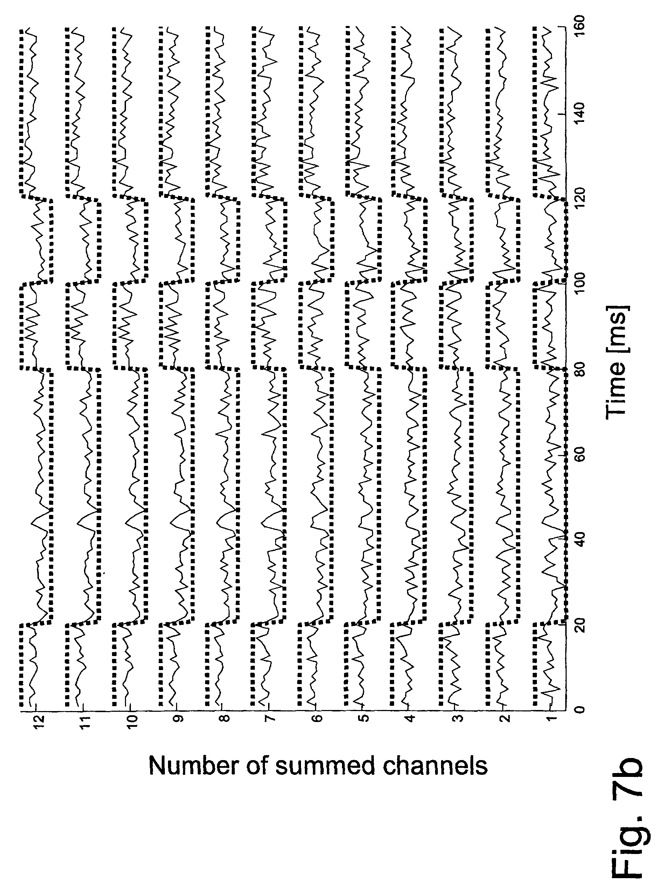

Fig. 7b is a graphical representation of combined signals formed by a method according to a preferred embodiment of the invention from the signals received in the reception channels of the receiver in a situation shown by way of example. It is shown in different graphs how the number of combined signals influences the combined signal formed according to the method.

The above mentioned combining of different sample strings improves the signal-to-noise ratio in situations where the information transmitted by different satellites is essentially the same. In the GPS system, there are two such parts at the beginning of each subframe where a certain number of bits are the same in all the satellites of the system. These parts are an 8-bit synchronization part in the first word of the subframe, a 17-bit time of week (TOW) in the second word, and a 3-bit subframe ID. The time of week changes at intervals of 6 seconds, and therefore the GPS time should be relatively accurately known in the receiver. However, this does not generally cause significant problems, because a sufficiently accurate estimate of the GPS time can be found by using an optimizing method known as such, which is based on fitting and in which the purpose is to find such a reference bit string or reference time, by which the best possible quality of fit optimization can be achieved. On the other hand, fewer bits of this weekday information can be used, if the changing time of six seconds is too short.

When the analysis sample string has been formed, the bit string wanted can be searched for from the analysis sample string by the correlation method, for example. By using a signal received from several satellites according to the invention to form the analysis sample string, the edges and values of the bits transmitted in the signals can be expressed more precisely than if the signal of only one satellite were used. The starting point of the bits can be searched for from the samples of the analysis sample string preferably by searching for a point at which the value of the bit changes. One bit in the GPS system comprises a certain number of epochs, each of which contains a certain number of chips. Then a certain number of samples corresponds to a certain bit in the sample string as well, and when the edge of one bit has been found, the values of the other bits can also be established in the following manner, for example. On the basis of the samples of the analysis sample string, an estimate is calculated for each bit as the mean value of the values of the bit-specific samples of the analysis sample string, for instance, and the first reference bit string is formed of the values thus calculated. The second reference bit string is formed according to which information common to each satellite is searched from the received signal. If the known bit string of the first word or the initial synchronization part (preamble) is searched for, a character string according to this preamble is set as the second reference character string. In the GPS system used at the moment of filing this application, this preamble is the bit string "10001011", but it is clear that the contents of this character string do not as such have a meaning for the application of this invention. After the setting of the second reference character string, the receiver MS, preferably the signal processing unit 3, starts to compare the first and the second reference character string to establish the correct synchronization.

In the correlation method, the second reference character string is compared bit by bit to the first reference character string. Because the first reference character string is longer than the second reference character string in this embodiment, as many bits as there are in the second character string are used from the first reference character string for each comparison. The result of the comparison is the correlation between the reference character strings. The reference character strings correspond to each other the better the higher the correlation result is. The correlation calculation is repeated so that at each time of repetition, the comparison is performed at a different point of the first reference character string, until the best correlation result is achieved. After the bit string searched for has been found in the first character string, a more accurate synchronization of the reference time can be carried out in the receiver MS on the basis of the location of the bit string found from the first character string.

In one preferred embodiment of the invention, more than one of the fields with the same contents are used: the 8-bit synchronization part, the 17-bit time of week (TOW) and the 3-bit subframe identifier, whereby the bit string to be correlated may become as long as 28 bits (=8+17+3). In that case, the parts of the bit string are not necessarily in sequence, and thus the correlation is performed on a piecewise continuous bit string so that all the known bits are taken into account in the correlation, for example
"10001011xxxxxxxxxxxxxxxxxxxxxx10101110101101101xx001".
In this example of a bit string, x means that the bit is not taken into account in the correlation.

In very weak signal conditions, the bit string fitting method described above does not necessarily give a sufficiently reliable result, because the length of the bit string used in the fitting is very small, 17 bits at the most. In that case, a Phase Locked Loop (PLL) 17 can be used in addition to the bit string fitting in a method according to another preferred embodiment of the invention. In some receivers, a phase locked loop is used to express the symbol rate from the received signal. With a phase locked loop 17, the edges of the bits can also be searched for from a weak signal, because a phase locked loop uses much more information (bits) to express the symbol rate. However, the phase locked loop 17 will not necessarily detect the values of the transmitted bits as such. By combining the bit string fitting with the use of a phase locked loop 17, the accuracy of synchronizing the reference clock of the receiver MS to the real GPS time can be improved.

After the right synchronization of the reference clock has been established, the times of arrival of the signal can be determined. When the GPS time is known accurately enough in the receiver MS, the time of arrival of the data frames received from the satellites can be established on the basis of the time of week (TOW) contained by the data frames. Then the location of the receiver MS can be determined preferably according to Formula 1. After this, the transit time of the signal of each satellite to the receiver can be calculated on the basis of the time of arrival and time of transmission in the known manner.

With regard to the application of the invention, the base station BS need not necessarily transmit to the receiver MS an estimate of the GPS time or the transit times of signals transmitted from the satellites, but it is sufficient that the receiver MS receives information about the transit time differences of the signals. Then the receiver MS performs the synchronization of frames received from different satellites to each other for combining, as has been described earlier in this specification.

Although the base station BS was used as a reference point in the example described above, naturally some other point, the location of which is known with some accuracy, can be selected as the reference point. Then this reference point is used as the default location of the receiver in location determination.

In a method according to a preferred embodiment of the invention, the calculations described above are performed in the digital signal processing unit 3 and/or the control block 7. In order to implement this, the required program instructions have been formed in the application software in the known manner. The results of the calculations and intermediate results possibly required are stored in the memory 4, 8. After the location calculation, the calculated location of the positioning receiver can preferably be shown on the display 12 in coordinate form, for example. The display 12 can also be used to show map information of the area in which the user's positioning receiver MS is located at the moment. This map information can be loaded via the mobile communication network, for example, preferably so that the determined location information is sent from the mobile station operations of the receiver MS to the base station BS, which transmits them for further processing to the SMLC, for example (not shown). When required, the mobile communication network may establish a connection via the Internet, for example, to a server (not shown) in which map information of the area in question is stored. After this, the map information is transmitted via the mobile communication network to the base station BS and further to the positioning receiver MS.

Although the invention was described above in connection with a receiver MS, it is obvious that the invention can also be applied in electronic devices of other types with means for determining the location of the electronic device. In that case, these means for determining the location of the electronic device comprise a positioning receiver according to a preferred embodiment of the invention.

The invention can also be applied in connection with other wireless data transfer networks than mobile communication networks. Then the location of a known point in the vicinity of the positioning receiver can be received via the wireless data transfer network.

It is clear that the present invention is not limited to the above described embodiments only, but its details can be modified without departing from the scope defined by the attached claims.

**Claims**

1.  A method for synchronizing a receiver (MS) to a code modulated signal transmitted by satellites (SV1—SV4), in which method information is transmitted by modulating the code modulated signal in the transmission step and demodulation is performed in the reception step for clarifying the transmitted information, and from which satellites at least partly the same information is transmitted essentially simultaneously, **characterized in that** in the method the signal transmitted by two or more satellites is received, the transit time differences of the received signals are determined for mutual synchronization of the signals transmitted from different satellites, and an analysis signal is formed by using at least a part of at least two synchronized signals received from different satellites.

2.  A method according to Claim 1, **characterized in that** reference information is formed, and said reference information is compared to said analysis signal for finding at least one said signal, which contains the same information.

3.  A method according to Claim 2, **characterized in that** correlation is used in the comparison.

4.  A method according to any one of the claims 1, 2 or 3, in which the information to be transmitted is sent in one or more data frames (SF1-SF5), and at least one data frame (SF1—SF5) includes at least an initial synchronization part (preamble, P), **characterized in that** the preamble (P) is searched from the analysis signal in the method.

5.  A method according to any one of the claims 1 to 4, in which the information to be transmitted is sent in one or more data frames (SF1-SF5), and at least one data frame (SF1—SF5) includes at least time data (TOW), **characterized in that** said time information (TOW) is searched from the analysis signal in the method.

6.  A method according to any one of the claims 1 to 5, in which the information to be transmitted is sent in one or more data frames (SF1-SF5), and at least one data frame (SF1—SF5) includes at least identification information (ID), **characterized in that** said identification information (ID) is searched from the analysis signal in the method.

7.  A method according to any one of the claims 1 to 6, in which the information to be transmitted includes at least ephemeris data, **characterized in that** said ephemeris data is used in the method for determining the location of the receiver.

8.  A method according to any one of the claims 1 to 7, **characterized in that** the information to be modulated in the method is binary information, and thus the information to be modulated consists of a number of information bits, each of which has either the first or the second binary value.

9.  A method according to Claim 8, **characterized in that** the code used in the modulation is formed of a set of chips, on the basis of the code either a first or a second value is selected for each chip, whereupon a signal modulated with said set of chips forms an epoch, that at least one of said epochs is used in the transmission of each information bit, and that the modulation is carried out so that if the value of the information bit to be modulated is the first binary value, values selected for the chips of said epoch are used in the modulation, or if the value of the information bit is the second binary value, the value opposite to the value selected for each chip of the epoch is used in the modulation.

10. A receiver (MS), which comprises at least synchronization means (3, 4, 7, 16) for synchronizing the receiver (MS) to the code modulated signal transmitted by the satellites (SV1—SV4), and demodulation means (1, 2a—2d, 5) for clarifying the transmitted information, and from which satellites at least partly the same information has been transmitted essentially simultaneously, **characterized in that** the receiver (MS) also comprises means (1, 2a—2d) for receiving the signal transmitted by two or more satellites (SV1—SV4), and that said synchronization means comprise at least means (7, 10, 11) for determining the transit time differences of the received signals, means (3) for synchronizing the received signals of different satellites (SV1—SV4) for mutual synchronization of the signals on the basis of said transit time differences, and means (3, 4) for forming an analysis signal by using at least part of at least two synchronized signals received from different satellites (SV1—SV4).

11. A receiver (MS) according to Claim 10, **characterized in that** it also comprises at least means (16) for forming at least one piece of reference information, and comparison means (7, 8) for comparing said reference information to said analysis signal for finding at least one said signal, which contains the same information.

12. A receiver (MS) according to Claim 10, **characterized in that** the comparison means comprise means (7) for performing correlation between said reference information and said analysis signal.

13. A receiver (MS) according to any one of the claims 10, 11 or 12, in which the information to be transmitted has been sent in one or more data frames (SF1—SF5), and at least one data frame (SF1—SF5) includes at least an initial synchronization part (preamble, P), **characterized in that** said comparison means comprise means (3, 4) for searching said preamble (P) from the analysis signal.

14. A receiver (MS) according to any one of the claims 10 to 13, in which the information to be transmitted has been sent in one or more data frames (SF1—SF5), and at least one data frame (SF1—SF5) includes at least time data (TOW), **characterized in that** said comparison means comprise means (3, 4) for searching said time data (TOW) from the analysis signal.

15. A receiver (MS) according to any one of the claims 10 to 14, in which the information to be transmitted has been sent in one or more data frames (SF1—SF5), and at least one data frame (SF1—SF5) includes at least identification information (ID), **characterized in that** said comparison means comprise means (3, 4) for searching said identification information (ID) from the analysis signal.

16. A receiver (MS) according to any one of the claims 10 to 15, in which the information to be transmitted includes at least ephemeris data, **characterized in that** the receiver also comprises means (3, 4, 7, 8) for using said ephemeris data for determining the location of the receiver (MS).

17. A receiver (MS) according to any one of the claims 10 to 16, **characterized in that** the information to be modulated is binary information, and thus the information to be modulated consists of a number of information bits, each of which has either the first or the second binary value.

18. A receiver (MS) according to Claim 17, **characterized in that** the code used in the modulation has been formed of a set of chips, on the basis of the code either a first or a second value has been selected for each chip, whereupon an epoch has been formed of a signal modulated with said set of chips, that at least one of said epochs has been used in the transmission of each information bit, and that the modulation has been carried out so that if the value of the information bit to be modulated is the first binary value, values selected for the chips of said epoch have been used in the modulation, or if the value of the information bit is the second binary value, the value opposite to the value selected for each chip of the epoch has been used in the modulation.

19. A positioning system, which comprises at least:

- two or more satellites (SV1—SV4), which comprise means for transmitting a code modulated signal, and means for transmitting information by modulating said code modulated signal, and
- a receiver (MS), which comprises synchronization means (3, 4, 7, 16) for synchronizing the receiver (MS) to the code modulated signal transmitted by the satellites (SV1—SV4), and demodulation means (1, 2a—2d, 5) for clarifying the transmitted information,

and from which satellites at least partly the same information has been arranged to be transmitted essentially simultaneously, **characterized in that** the receiver (MS) also comprises means (1, 2a—2d) for receiving the signal transmitted by two or more satellites (SV1—SV4), means (2a—2d) for determining the transit time differences of the received signals, and that said synchronization means comprise at least means (7, 10, 11) for determining the transit time differences of the received signals, means (3) for mutual synchronization of the received signals of different satellites (SV1—SV4) on the basis of said transit time differences, and means (3, 4) for forming an analysis signal by using at least part of at least two synchronized signals received from different satellites (SV1—SV4).

SV1    SV2    SV3

SV4

BS

MS

Fig. 1

EP 1 146 349 A2

EP 1 146 349 A2

Fig. 2

| SUBFRAME1 | SUBFRAME2 | SUBFRAME3 | SUBFRAME4 | SUBFRAME5 |
|---|---|---|---|---|

SF1  SF2  SF3  SF4  SF5

| W1 | W2 | W3 | W4 | W5 | W6 | W7 | W8 | W9 | W10 |
|---|---|---|---|---|---|---|---|---|---|

| TOW | N | N | ID | N | N | PARITY |
|---|---|---|---|---|---|---|

W2

| PREAMBLE | TLM | N | N | PARITY |
|---|---|---|---|---|

W1

13

FR

Subframe #1  Subframe #2  Subframe #3  Subframe #4  Subframe #5

TOW  TOW  TOW  TOW  TOW

SM

SM

Code modulated signal

1023 chips

Navigation information

$N_{ms}^k$

$N_{chip}^k$

$\Delta chip^k$

Fig. 3

EP 1 146 349 A2

14

EP 1 146 349 A2

SM

ToA1
ToA2
ToA3
ToA4

SV1
SV2
SV3
SV4

Fig. 4

15

Fig. 5

Fig. 6

Fig. 7a

Fig. 7b